# EUROPÄISCHE PATENTANMELDUNG

(11) **EP 1 146 268 A2**
(43) Veröffentlichungstag der Anmeldung: **17.10.2001**
(21) Anmeldenummer: 01108925.7
(22) Anmeldetag: 10.04.2001
(51) Int. Cl.: F16K 31/363

(54) **Betätigungsvorrichtung für ein Ventilglied eines Ventils sowie ein derartiges Ventil**

(30) Priorität: 10.04.2000 DE 10017811; 10.04.2000 DE 20006600 U
(71) Anmelder: MLS Lanny GmbH, 75323 Bad Wildbad (DE)
(72) Erfinder: Lanny, Michael, 75323 Bad Wildbad (DE)
(74) Vertreter: Leitner, Waldemar, Dr. techn.

(57) **Zusammenfassung**

Die Erfindung betrifft eine Betätigungsvorrichtung für ein Ventilglied eines Ventils, durch die das Ventilglied (5) zumindest von einer Ruhestellung, in der durch das Ventilglied (5) ein Durchgang zwischen einem Primäranschluß (2) und einem Sekundäranschluß (3) des Ventils (1) gesperrt ist, in eine Arbeitsstellung, in der dieser Durchgang zumindest teilweise freigegeben ist, bewegbar ist, wobei die Betätigungsvorrichtung (30) ein druckbeaufschlagbares Betätigungselement (31) aufweist, dessen durch eine Druckbeaufschlagung durch ein Druckmedium erzeugte Auslenkung auf das Ventilglied (5) übertragbar ist.

Erfindungsgemäß ist vorgesehen, daß dem Betätigungselement (31) ein Regulierungsventil (37) vorgeschaltet ist, durch welches der Druck des Druckmediums regelbar ist, daß die Betätigungsvorrichtung (30) einen ersten Druckaufnehmer (41), durch den der das Betätigungselement (31) der Betätigungsvorrichtung (30) beaufschlagende Druck des Druckmediums erfaßbar ist, und einen zweiten Druckaufnehmer (42), durch den der am Ausgang des Sekundäranschlusses (3) des Ventils (1) auftretende Druck erfaßbar ist, aufweist, und daß Ausgangssignale (A1, A2) der beiden Druckaufnehmer (41, 42) einer Steuer-/Auswerteeinrichtung (50) zuführbar sind, durch die ein Steuersignal (S) für das Regulierungsventil (37) erzeugbar ist.

## Beschreibung

Die Erfindung betrifft eine Betätigungsvorrichtung für ein Ventilglied eines Ventils, durch die das Ventilglied zumindest von einer Ruhestellung, in der durch das Ventilglied ein Durchgang zwischen einem Primäranschluß und einem Sekundäranschluß des Ventils gesperrt ist, in eine Arbeitsstellung, in der dieser Durchgang zumindest teilweise freigegeben ist, bewegbar ist, wobei die Betätigungsvorrichtung ein druckbeaufschlagbares Betätigungselement aufweist, dessen durch eine Druckbeaufschlagung durch ein Druckmedium erzeugte Auslenkung auf das Ventilglied übertragbar ist.

Eine derartige Betätigungsvorrichtung für ein Ventilglied eines Ventils ist aus der DE 40 32 991 bekannt. Diese Druckschrift beschreibt ein Ventil für Fluide, welches als 5/2-Wegeventil ausgebildet ist. Ein Ventilglied ist von einer ersten Stellung in eine zweite Stellung und umgekehrt bewegbar, wobei in der ersten Stellung ein erster Durchgang zwischen dem Druckluftanschluß und einer Arbeitsleitung gesperrt ist, während in der zweiten Stellung dieser erste Durchgang freigegeben ist. Ein zweiter Durchgang zwischen dem Druckluftanschluß und einer weiteren Arbeitsleitung ist in der ersten Stellung des Ventilschiebers freigegeben und in der zweiten Stellung gesperrt. Die Betätigungsvorrichtung des Ventils weist einen Kolben auf, der mit Druckluft beaufschlagt werden kann. Die Druckluft wird durch eine Elektromagnetspule mit Anker auf den Kolben übertragen. Eine durch die Beaufschlagung mit Druckluft erzeugte Auslenkung des Kolbens wird auf das Ventilglied entgegen der Rückstellkraft einer Feder übertragen.

Durch die bekannte Betätigungsvorrichtung ist das Ventilglied zwar zwischen zwei Stellungen hin- und herbewegbar, so daß ein Durchgang geöffnet und geschlossen werden kann. In vielen Anwendungsfällen ist es jedoch notwendig, einen Durchgang nicht nur zu öffnen und zu schließen, sondern auch die Durchflußmenge durch diesen Durchgang und den am Durchgang herrschenden Druck zu regeln. Dies ist insbesondere dann schwierig, wenn hohe Drücke an den Anschlüssen anliegen, da dann beim Öffnen oder Schließen des Durchgangs große Kräfte aufgewendet werden müssen. Um die Durchflußmenge sicher zu regeln oder zu steuern, ist es notwendig, die Kraft auf das Ventilglied in Abgängigkeit von den Drücken in den Anschlüssen sowie von der Durchflußmenge genau vorzugeben. Eine bloße Beaufschlagung eines Kolbens mit Druckluft, welche die Kraft an das Ventilglied überträgt, ist jedoch nicht geeignet, eine so genaue Einstellung des Ventilglieds hierbeizuführen, daß die Durchflußmenge sicher geregelt werden kann.

Aus der DE-U1 92 02 519 der Anmelderin ist ein Ventil mit einem Ventilgehäuse bekannt, in dem ein Primäranschluß für ein Primärmedium mit einem Primärdruck und ein Sekundäranschluß für ein Medium mit einem Sekundärdruck vorgesehen ist. Das Ventilglied ist im Ventilgehäuse in axialer Richtung verschiebbar geführt und wird von einem Betätigungsorgan der Betätigungsvorrichtung mit einer Betätigungskraft beaufschlagt, so daß das Ventilglied aus seiner Ruhe-Stellung in seine Arbeitsstellung bewegbar ist. Zur Rückstellung des Ventilglieds von seiner Arbeits- in seine Ruhestellung ist vorgesehen, daß durch das Betätigungsorgan der Betätigungsvorrichtung die das Ventilglied beaufschlagende Kraft verringert wird, so daß das Ventilglied durch die Kraft rücktreibender Federn von seiner Arbeitsin seine Ausgangsstellung zurückbewegt wird. Die das Ventilglied beaufschlagende Betätigungskraft der Betätigungsvorrichtung wird hierbei durch einen Proportionalmagneten erzeugt. Ein derartiges Betätigungsorgan ist zwar vollkommen ausreichend, wenn durch das Ventil Medien mit kleineren Drücken geregelt oder gesteuert werden sollen. Bei einer größeren Druckbeaufschlagung und/oder bei größeren Durchflußmengen reicht aber die von einem Proportionalmagneten (bei einer akzeptablen Baugröße) erzeugbare Betätigungskraft nicht mehr aus.

Es ist daher Aufgabe der vorliegenden Erfindung, eine Betätigungsvorrichtung für ein Ventilglied der eingangs genannten Art derart weiterzubilden, daß mit einem die erfindungsgemäße Betätigungsvorrichtung verwendenden Ventil auch größere Drücke und/oder Durchflußmengen sicher geregelt oder gesteuert werden können.

Diese Aufgabe wird erfindungsgemäß dadurch gelöst, daß dem Betätitgungselement ein Regulierungsventil vorgeschaltet ist, durch welches der Druck des Druckmediums regelbar ist, daß die Betätigungsvorrichtung einen ersten Druckaufnehmer, durch den der das Betätigungselement der Betätigungsvorrichtung beaufschlagende Druck des Druckmediums erfaßbar ist, und einen zweiten Druckaufnehmer, durch den der am Ausgang des Sekundäranschlusses des Ventils auftretende Druck erfaßbar ist, aufweist, und daß Ausgangssignale der beiden Druckaufnehmer einer Steuer-/Auswerteeinrichtung zuführbar sind, durch die ein Steuersignal für das Regulierungsventil erzeugbar ist.

Durch die erfindungsgemäßen Maßnahmen wird in vorteilhafter Art und Weise eine Betätigungsvorrichtung für ein Ventilglied geschaffen, welche sich dadurch auszeichnet, daß in einfacher und daher kostengünstigen Art und Weise eine hohe Betätigungskraft für das Ventilglied erzeugbar ist, wobei die durch das Druckmedium übertragene Betätigungskraft in Abhängigkeit vom Druck am Ausgang des Sekundäranschlusses einstellbar ist. Es ist daher bei einem mit der erfindungsgemäßen Betätigungsvorrichtung ausgestatteten Ventil in vorteilhafter Art und Weise möglich, auch weit über zwanzig Bar liegende Drücke und/oder sehr große Durchflußmengen sicher zu regeln oder zu steuern. Dabei ist in einfacher Art und Weise der am Ausgang des Sekundäranschlusses herrschende Druck des Sekundärmediums durch eine entsprechende Steuerung oder Regelung des Drucks des das Betätigungselement der Betätigungsvorrichtung beaufschlagendenden Druckmediums steuer- oder regelbar und vorzugsweise auf einem konstanten Druckpegel haltbar.

Eine weitere vorteilhafte Weiterbildung der Erfindung sieht vor, daß durch die Steuer- Auswerteeinrichtung der Betätigungsvorrichtung das Mischungsverhältnis zwischen dem Ausgangssignal des ersten und dem Ausgangssignal des zweiten Druckaufnehmers einstellbar ist. Eine derartige Maßnahme besitz den Vorteil, daß hierdurch in einfacher Art und Weise eine einfache Anpassung des erfindungsgemäßen Ventils an die aktuell herrschenden Druckverhältnisse und/oder Durchflußmengen erzielbar ist.

Eine vorteilhafte Weiterbildung der Erfindung sieht vor, daß das Betätigungselement der erfindungsgemäßen Betätigungsvorrichtung als eine Membran oder ein Kolben ausgebildet ist. Eine derartige erfindungsgemäße Maßnahme besitzt den Vorteil einer besonders einfachen und daher kostengünstigen Herstellbarkeit.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im folgenden anhand der Figuren beschrieben werden. Es zeigen:
- Figur 1: ein erstes Ausführungsbeispiel einer Betätigungsvorrichtung für ein Ventilglied zusammen mit dem Ventil in einer Ruhestellung,
- Figur 2: das erste Ausführungsbeispiel der Figur 1 in seiner Arbeitsstellung, und
- Figur 3: ein zweites Ausführungsbeispiel.

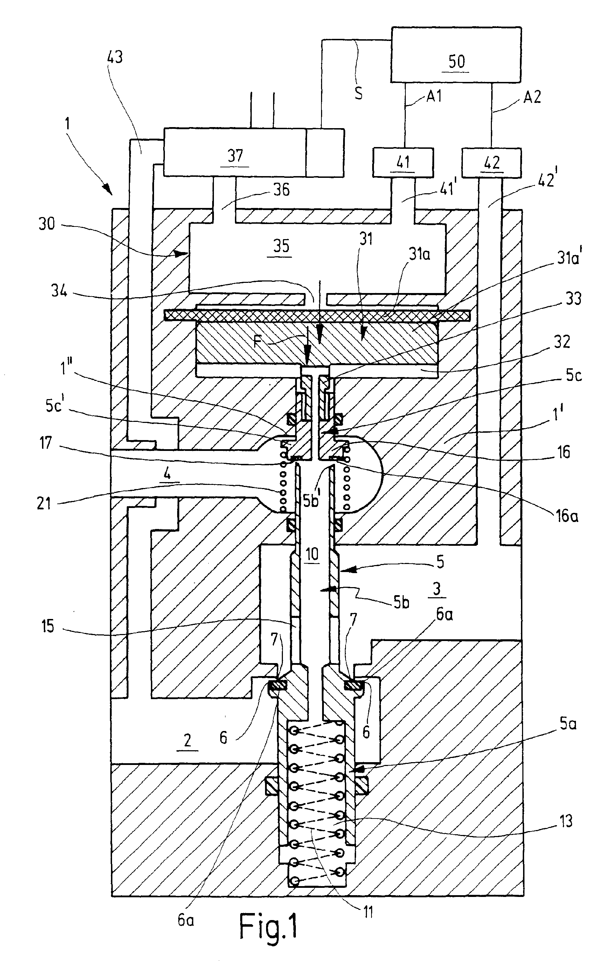

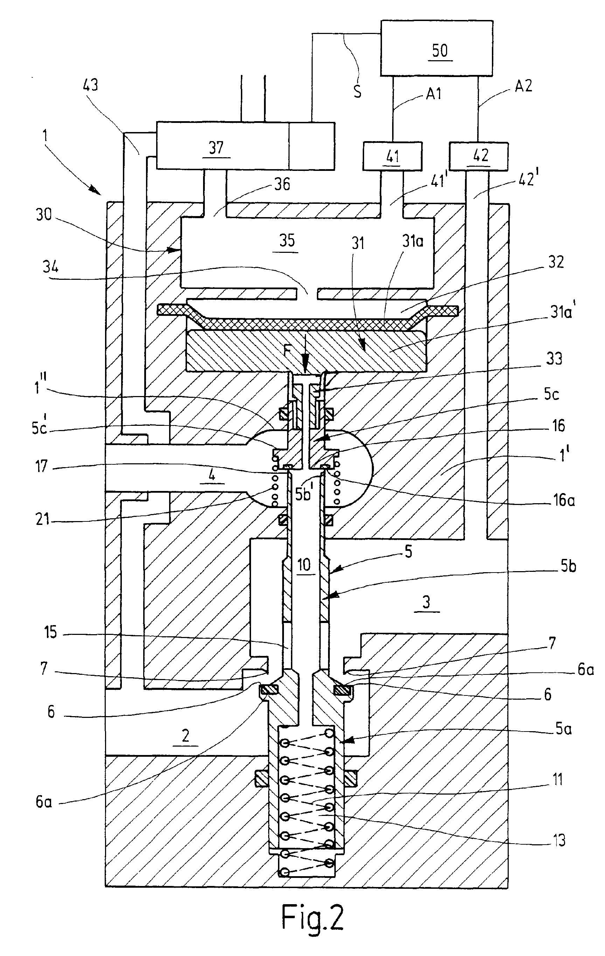

In den Figuren 1 und 2 ist nun ein allgemein mit 1 bezeichnetes Ventil mit einem Primäranschluß 2 für ein Primärmedium mit einem Primärdruck und ein Sekundäranschluß 3 für ein Sekundärmedium mit einem Sekundärdruck, welches nicht zwingenderweise identisch mit dem Primärmedium sein muß, dargestellt. Im Inneren eines Ventilgehäuses 1' ist ein in Axialrichtung verschiebbar geführtes und von einem Betätigungselement 31 einer Betätigungsvorrichtung 30 beaufschlagtes Ventilglied 5 angeordnet. Das Betätigungselement 31 der Betätigungsvorrichtung 30 zur Erzeugung der das Ventilglied 5 beaufschlagenden Betätigungskraft F ist beim hier beschriebenen ersten Ausführungsbeispiel als eine im Ventilgehäuse 4 gelagerte Membran 31 a ausgebildet, die auf der dem Ventilglied 5 abgewandten Seite von einem Druckmedium, welches nicht zwingenderweise mit dem Primärmedium oder dem Sekundärmedium übereinstimmen muß, beaufschlagbar ist. Hierzu ist beim beschriebenen Ausführungsbeispiel vorgesehen, daß vor der in einer Kammer 32 des Ventilgehäuses 4 auslenkbar gelagerten Membran 31 a eine mit der Kammer 32 über eine Durchgangsöffnung 34 verbundene Vorkammer 35 für das Druckmedium angeordnet ist, die einen Eingang 36 aufweist, dem ein Regulierungsventil 37 vorgeschaltet ist, durch welches der Druck des der Vorkammer 35 zuführbaren Druckmediums regulierbar, d. h. steuer- oder regelbar, ist. Eine Druckerhöhung in der Vorkammer 35 der Membrankammer 32 führt somit zu einer Auslenkung der Membran 31 a und damit zu einer Verschiebebewegung einer in der Kammer 32 unter der Membran 31 a verschiebbar gelagerten Druckplatte 31 a', durch die das Ventilglied 5 in Richtung der Beaufschlagungskraft F verschiebbar ist, indem ein Stössel 33 das Ventilglied 5 kraftbeaufschlagt. Das Vorsehen einer Druckplatte 31 a' ist zwar vorteilhaft, aber nicht zwingend.

Bevor nun die Funktionsweise der Betätigungsvorrichtung 30 für das Ventilglied 5 näher erläutert werden soll, soll der Verständlichkeit dieser Ausführungen halber zuerst noch kurz der weitere, seinem Grundprinzip nach aus der DE-U1 92 02 519 bekannte Aufbau des Ventils 1 erläutert werden, wobei zur Vermeidung von Wiederholungen die technische Lehre dieser Druckschrift durch diese Bezugnahme explizit in die Offenbarung dieser Anmeldung miteinbezogen werden soll. In dem in Figur 1 gezeigten rückgestellten Zustand des Ventilglieds 5, also in der Ruhestellung des Ventils 1, liegt eine Sitzfläche 6 des Ventilglieds 5 an einem Ventilsitz 7 des Primäranschlusses 2 druckdicht an, wobei vorzugsweise vorgesehen ist, daß die Sitzfläche 6 eine umlaufende Dichtung 6a aufweist, die mit dem vorzugsweise als Ringschneide ausgeführten Ventilsitz 7 derart zusammenwirkt, daß im geschlossenen Zustand des Ventilglieds 5 eine Linienberührung zwischen Sitzfläche 6 und Ventilsitz 7 ausgebildet ist und ein Durchdringen des Primärmediums zum Sekundäranschluß 3 verhindert wird. Eine Längsbohrung 13 eines unteren Teils 5a des Ventilglieds 5 nimmt eine Feder 11 auf, welche bewirkt, daß ohne eine entsprechende Beaufschlagung des Ventilglieds 5 durch die Betätigungsvorrichtung 30 die Sitzfläche 6 durch die rückstellende Kraft der Feder 11 gegen den Ventilsitz 7 des Primäranschlußes 2 gedrückt wird.

Im hier gezeigten Ausführungsbeispiel weist das Ventil 1 noch desweiteren einen Tertiäranschluß 4 für ein Tertiärmedium mit einem Tertiärdruck auf, welches wiederum nicht notwendigerweise mit dem Primär- und/oder dem Sekundärmedium identisch zu sein braucht. In der Regel wird der Tertiäranschluß 4 zur Entlüftung des Ventils verwendet, dergestalt, daß in einer Entlüftungsstellung des Ventils 1 eine Verbindung zwischen Sekundär- und Tertiäranschluß 3, 4 herstellbar ist, so daß das Sekundärmedium über den Tertiäranschluß 4 entweichen kann.

Um nun diese Verbindung herstellen zu können, ist vorgesehen, daß das Ventilglied 5 zumindest in seinem mittleren Teil 5b röhrenförmig ausgestaltet ist, und eine Eintrittsöffnung 15 aufweist, durch die das Sekundärmedium in den Innenraum 10 des Ventilglieds 5 eintreten kann. Ein freies oberes Ende 5b' des mittleren Teils 5b des Ventilglieds 5 bildet einen Ventilsitz 17 aus, der mit einer eine umlaufende Dichtung 16a aufweisenden Sitzfläche 16 eines oberen Teils 5c des Ventilglieds 5 zusammenwirkt. Der Ventilsitz 17 ist hierbei wiederum vorzugsweise als Ringschneide ausgebildet, so daß im geschlossenen Zustand des Ventilsitzes 17 ein Durchtritt des Sekundärmediums oder des Tertiärmediums vom Sekundäranschluß 3 zum Tertiäranschluß 4 und umgekehrt verhindert ist. Der obere Teil 5c des Ventilglieds 5 - welcher relativbeweglich zu den miteinander verbundenen Teilen 5a, 5b derselben ist - wird von der rückstellenden Kraft einer weiteren Feder 21 beaufschlagt, welche bewirkt, daß ohne Kraftbeaufschlagung des oberen Teils 5c des Ventilglieds 5 durch die Betätigungsvorrichtung 30 ein Anschlag 5c' des Ventilglieds 5 gegen eine Anschlagsfläche 1" des Ventilgehäuses gedrückt wird.

Auch der obere Teil 5c des Ventilglieds 5 sowie der Stößel 33 sind röhrenförmig ausgebildet, so daß sich der Innenraum 10 auch durch den oberen Teil 5c des Ventilglieds 5 und durch den Stößel 33 erstreckt. An seinem dem Betätigungselement 31 zugewandten Ende weist der Stößel 33 mindestens eine Austrittsöffnung auf, durch die das Sekundärmedium aus dem Innenraum 10 austreten und in die Kammer 32 eintreten und somit das Betätigungselement 31 entgegen der Druckbeaufschlagung durch das Druckmedium mit einem Druck beaufschlagen kann, der im wesentlichen gleich dem am Ausgang des Sekundäranschlusses 3 herrschenden Druck ist.

Die Funktionsweise der beschriebenen Betätigungsvorrichtung 30 und somit des Ventils 1 ist nun wie folgt:

In der in Figur 1 dargestellten Ruhestellung wird der Druck in der Vorkammer 35 auf die Membran 31 a der Betätigungsvorrichtung 30 derart reguliert, daß das Ventilglied 5 mit keiner oder nur einer derart geringen Betätigungskraft F beaufschlagt ist, daß die Sitzfläche 6 des unteren Teils 5a des Ventilglieds 5 gegen den Ventilsitz 7 des Primäranschlusses 2 und die Anschlagfläche 5c' des oberen Teils 5c des Ventilglieds 5 gegen die Anschlagfläche 1" des Ventilgehäuses 1' gedrückt wird, so daß in dieser Ruhestellung des Ventils 1 ein Übertritt des Primärmediums vom Primäranschluß 2 zum Sekundäranschluß 3 verhindert und der Sekundäranschluß 3 über den Tertiäranschluß 4 entlüftet ist, da die durch den Ventilsitz 17 und die Sitzfläche 16 gebildete zweite Ventilöffnung offen ist.

Soll nun das im Primäranschluß 2 befindliche Primärmedium zum Sekundäranschluß 3 weitergeleitet werden, wird der Druck des Druckmediums in der Vorkammer 35 erhöht, indem das Regulierungsventil 37 der Betätigungsvorrichtung 30 geöffnet und derart der Druck in der Vorkammer 35 erhöht wird. Dies bewirkt eine Auslenkung der Membran 31 a in Richtung der Betätigungskraft F, welche bewirkt, daß der obere Teil 5c des Ventilglieds 5 in Richtung der Betätigungskraft F verschoben wird, so daß die zweite Ventilöffnung geschlossen wird, indem die Sitzfläche 16 sich dichtend auf den Ventilsitz 17 des mittleren Teils 5b des Ventilglieds 5 setzt und derart den Durchgang vom Sekundäranschluß 3 zum Tertiäranschluß 4 verschließt.

Eine weitere Druckerhöhung in der Vorkammer 35 bewirkt eine weitere Auslenkung der Membran 31 a, die in einer weiteren Verschiebung des oberen Teils 5c des Ventilglieds 5 resultiert, so daß dann der untere Teil 5a des Ventilglieds 5 entgegen der rückstellenden Kraft der Feder 11 nach unten bewegt wird, mit der Folge, daß die erste Ventilöffnung geöffnet wird, indem die Sitzfläche 6 vom Ventilsitz 7 wegbewegt wird. Das Primärmedium kann nun vom Primäranschluß 2 zum Sekundäranschluß 3 strömen.

Durch den Innenraum 10 des Ventilglieds 5 und die Austrittsöffnung des Stößels 33 gelangt das Sekundärmedium in die Kammer 32 und beaufschlagt das Betätigungselement 31 mit einem Druck, der im wesentlichen gleich dem am Ausgang des Sekundäranschlusses 3 herrschenden Druck ist. Die durch diese Druckbeaufschlagung bewirkte Kraft auf das Betätigungselement 31 wirkt zusammen mit den Federkräften der Federn 11, 21 der Auslenkung des Betätigungselements 31 entgegen. Um die Verbindung zwischen Primäranschluß 2 und Sekundäranschluß 3 offen zu halten, ist stets erforderlich, daß der Druck des Druckmediums größer ist als der Druck des Sekundärmediums in der Kammer 32, welcher im wesentlichen gleich dem am Ausgang des Sekundäranschlusses 3 herrschenden Druck ist. Dieser Regulierungszustand des Ventils ist in Figur 2 dargestellt.

Wird nun der Druck in der Vorkammer 35 wieder erniedrigt, so schließt sich die erste Ventilöffnung, indem die Sitzfläche 6 wieder durch die rücktreibende Kraft der Feder 11 gegen den Ventilsitz 7 gedrückt wird. Eine weitere Druckverminderung in der Vorkammer 35 bewirkt dann ein Öffnen der zweiten Ventilöffnung, mit der Folge, daß das im Sekundäranschluß 3 befindliche Medium sich über den Tertiäranschluß 4 entlüften kann.

Um nun den Ausgangsdruck des im Sekundäranschluß 2 befindlichen Mediums, also in der Regel des Sekundärmediums, hinreichend genau zu regulieren, also steuern und/oder regeln zu können, sind - wie bereits oben kurz erwähnt - die beiden Druckaufnehmer 41 und 42 vorgesehen, wobei der erste Druckaufnehmer 41 den Druck des Druckmediums in der Vorkammer 35, also im wesentlichen den das Betätigungselement 31 beaufschlagenden Druck des Druckmediums, und der zweite Druckaufnehmer 42 den Druck am Ausgang des Sekundäranschlußes 3 aufnimmt. Es soll an dieser Stelle angeführt werden, daß zwar in den Figuren gezeigt ist, daß die Druckaufnehmer 41, 42 über Kanäle 41', 42' mit der Vorkammer 35 bzw. mit dem Sekundäranschluß 3 verbunden sind. Eine derartige Konstruktion ist aber nicht zwingend erforderlich. Es ist z. B. auch möglich, einen oder beide Druckaufnehmer 41, 42 direkt im entsprechenden Hohlraum anzuordnen.

Ebenso ist in den Figuren gezeigt, daß das Druckmedium für die Membran 31 a mittels einer Ableitung 43 aus dem Primäranschluß 2 abgezweigt wird, daß also als Druckmedium das Primärmedium verwendet wird. Auch diese Konstruktion ist nicht zwingend erforderlich, da es auch durchaus sinnvoll oder erforderlich sein kann, als Druckmedium ein vom Primär-, Sekundär- oder Tertiärmedium unterschiedliches Medium zu verwenden. Beispielsweise ist dies dann der Fall, wenn das Primärmedium ein nicht oder nur schwer komprimierbares Medium, z. B. eine schwer komprimierbare Flüssigkeit wie Wasser ist. Jedenfalls ist dann vorgesehen, daß das Regulierungsmedium für die Membran 31a extern zugeführt wird.

Da - bedingt durch unvermeidliche Kraft- und Reibungsverluste und die rückstellende Kraft der Federn 11, 21 sowie gegebenfalls durch strömungsdynamische oder statische Gründe - der Ausgangsdruck im Sekundäranschluß 3 nicht gleich dem Druck des die Membran 31a beaufschlagenden und somit die Betätigungskraft F für das Ventilglied 5 erzeugenden Druckmediums ist, ist in der Regel eine Nachregulierung des Drucks des Druckmediums erforderlich, um den am Ausgang des Sekundäranschlusses 3 herrschenden Druck zu regulieren, also zu steuern und/oder zu regeln, und hierbei vorzugsweise auf einem bestimmten Druckniveau zu halten. Zu diesem Zweck werden nun die Ausgangssignale A1 und A2 der beiden Druckaufnehmer 41, 42 zu einer Steuer-/Auswerteeinrichtung 50 geleitet, durch die ein Steuersignal S für das Regulierungsventil 37 der Betätigungsvorrichtung 30 erzeugbar ist, welches bewirkt, daß durch das entsprechende Steuersignal S der Druck des Regulierungsmediums in der Vorkammer 35 entsprechend erhöht oder erniedrigt werden kann, um den gewünschten Ausgangsdruck durch Regelung der Stellung des Ventilgleids 5 einzuregeln.

Vorzugsweise ist nun vorgesehen, daß in die Ermittlung des Steuersignals S nicht nur das den Ausgangsdruck charakterisierende Ausgangssignal A2 des zweiten Druckaufnehmers 42, sondern auch das Ausgangssignal A1 des den Druck in der Vorkammer 35 erfassenden ersten Druckaufnehmers 41 eingeht, wobei bevorzugt wird, daß zur Ermittlung des Steuersignals S eine gewichtete Überlagerung der beiden Ausgangssignale A1, A2 vorgenommen wird. Um nun zu verhindern, daß in Folge von Regelungstotzeiten ein instabiler Zustand am Ausgang des Sekundäranschlusses 3 auftritt, ist vorzugsweise vorgesehen, daß die Steuer-/Auswerteeinrichtung 50 einen Schalter aufweist, durch den die Gewichtung der beiden Ausgangssignale A1, A2 bei ihrer Überlagerung variierbar ist, um hiermit eine bessere und einfachere Anpassung an die aktuellen Gegebenheiten zu erreichen.

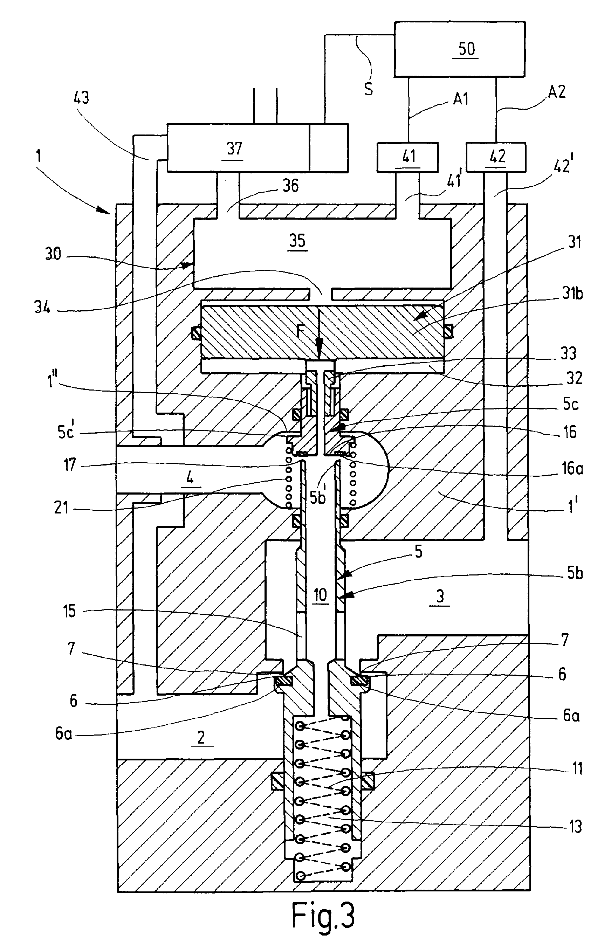

In Figur 3 ist nun ein zweites Ausführungsbeispiel der Betätigungsvorrichtung 30 dargestellt, welches im wesentlichen mit dem ersten Ausführungsbeispiel der Figuren 1 und 2 übereinstimmt, so daß einander entsprechende Teile mit gleichen Bezugszeichen versehen werden können und nicht mehr näher beschrieben werden müssen. Der wesentliche Unterschied zwischen den beiden Ausführungsbeispielen besteht darin, daß anstelle der beim ersten Ausführungsbeispiel vorgesehenen Membran 31 a im zweiten Ausführungsbeispiel das Betätigungselement 31 der Betätigungsvorrichtung 30 als ein in der Kammer 32 verschiebbar geführter Kolben 31b ausgebildet ist, der durch das in der Vorkammer 35 befindliche Druckmedium beaufschlagbar ist. An der dem Ventilglied 5 zugewandten Seite ist ein mit dem Kolben 31 b verbundener Stössel 33 vorgesehen, durch den der obere Teil 5c des Ventilglieds 5 beaufschlagbar ist.

Bei obigen Erläuterungen wurde davon ausgegangen, daß die Betätigungsvorrichtung 30 in das Ventilgehäuse 1' integriert ist. Es ist aber auch möglich, die Betätigungsvorrichtung 30 als ein separates, auf ein Ventilgehäuse aufsetzbares Bauteil auszubilden.

## Patentansprüche

1. Betätigungsvorrichtung für ein Ventilglied eines Ventils, durch die das Ventilglied (5) zumindest von einer Ruhestellung, in der durch das Ventilglied (5) ein Durchgang zwischen einem Primäranschluß (2) und einem Sekundäranschluß (3) des Ventils (1) gesperrt ist, in eine Arbeitsstellung, in der dieser Durchgang zumindest teilweise freigegeben ist, bewegbar ist, wobei die Betätigungsvorrichtung (30) ein druckbeaufschlagbares Betätigungselement (31) aufweist, dessen durch eine Druckbeaufschlagung durch ein Druckmedium erzeugte Auslenkung auf das Ventilglied (5) übertragbar ist, **dadurch gekennzeichnet, daß** dem Betätigungselement (31) ein Regulierungsventil (37) vorgeschaltet ist, durch welches der Druck des Druckmediums regelbar ist, daß die Betätigungsvorrichtung (30) einen ersten Druckaufnehmer (41), durch den der das Betätigungselement (31) der Betätigungsvorrichtung (30) beaufschlagende Druck des Druckmediums erfaßbar ist, und einen zweiten Druckaufnehmer (42), durch den der am Ausgang des Sekundäranschlusses (3) des Ventils (1) auftretende Druck erfaßbar ist, aufweist, und daß Ausgangssignale (A1, A2) der beiden Druckaufnehmer (41, 42) einer Steuer-/Auswerteeinrichtung (50) zuführbar sind, durch die ein Steuersignal (S) für das Regulierungsventil (37) erzeugbar ist.

2. Betätigungsvorrichtung nach Anspruch 1, **dadurch gekennzeichnet, daß** zur Ermittlung des Steuersignals (S) für das Regulierungsventil (37) durch die Steuer-/Auswerteeinrichtung (50) eine gewichtete Überlagerung der beiden Ausgangssignale (A1, A2) der Druckaufnehmer (41, 42) vornehmbar ist.

3. Betätigungsvorrichtung nach einem der vorangehenden Ansprüche, **dadurch gekennzeichnet, daß** die Steuer-/Auswerteeinrichtung (50) einen Schalter aufweist, durch den die Gewichtung der beiden Ausgangssignale (A1, A2) bei ihrer Überlagerung variierbar ist.

4. Betätigungsvorrichtung nach einem der vorangehenden Ansprüche, **dadurch gekennzeichnet, daß** das Betätigungselement (31) der Richtung der Beaufschlagung durch das Druckmedium entgegengesetzt durch ein im Sekundäranschluß (3) befindliches Sekundärmedium druckbeaufschlagbar ist.

5. Betätigungsvorrichtung nach einem der vorangehenden Ansprüche, **dadurch gekennzeichnet, daß** das Betätigungselement (31) in einer Kammer (32) angeordnet ist.

6. Betätigungsvorrichtung nach einem der vorangehenden Ansprüche, **dadurch gekennzeichnet, daß** vor der Kammer (32) für das Betätigungselement (31) eine über eine Durchgangsöffnung (34) mit dieser (32) verbundene Vorkammer (35), der das das Betätigungselement (31) beaufschlagende Druckmedium zuführbar ist, angeordnet ist.

7. Betätigungsvorrichtung nach einem der vorangehenden Ansprüche, **dadurch gekennzeichnet, daß** der Kammer (32), gegebenenfalls über die Vorkammer (35), das Druckmedium über eine Ableitung (43) aus dem Primäranschluß (2) des Ventils (1) zuführbar ist.

8. Betätigungsvorrichtung nach einem der vorangehenden Ansprüche, **dadurch gekennzeichnet, daß** das Betätigungselement (31) als eine in der Kammer (32) auslenkbar angeordnete Membran (31 a) oder als ein in der Kammer (32) verschiebbar gelagerter Kolben (31 b) ausgebildet ist.

9. Betätigungsvorrichtung nach Anspruch 9, **dadurch gekennzeichnet, daß** unter der auslenkbaren Membran (31a) eine Druckplatte (31a') angeordnet ist, die einen Stössel (33) aufweist, durch den das Ventilglied (5) beaufschlagbar ist.

10. Ventil, das ein Ventilgehäuse (1') aufweist, in dem ein Primäranschluß (2) für ein Primärmedium mit einem Primärdruck und ein Sekundäranschluß (3) für ein Sekundärmedium mit einem Sekundärdruck angeordnet ist, wobei ein Durchgang zwischen dem Primäranschluß (2) und dem Sekundäranschluß (3) durch ein Ventilglied (5) absperrbar und freigebbar ist, **dadurch gekennzeichnet, daß** das Ventilglied (5) durch eine Betätigungsvorrichtung (30) nach einem der Ansprüche 1 bis 9 beaufschlagbar ist.

11. Ventil nach einem der vorangehenden Ansprüche, **dadurch gekennzeichnet, daß** ein mit einem unteren Teil (5a) des Ventilglieds (5) verbundener mittlerer Teil (5b) des Ventilglieds (5) eine Eintrittsöffnung (15) aufweist, die mit dem Sekundäranschluß (3) in Verbindung steht, und daß durch diese Eintrittsöffnung (15) ein Medium in einen hohlen Innenraum(10) des Ventilglieds (5) eintretbar ist.

12. Ventil nach einem der vorangehenden Ansprüche, **dadurch gekennzeichnet, daß** durch den hohlen Innenraum (10) des Ventilglieds (5) das Betätigungselement (31) der Richtung der Beaufschlagung durch das Druckmedium entgegensetzt durch das Sekundärmedium druck beaufschlagbar ist.

13. Ventil nach einem der vorangehenden Ansprüche, **dadurch gekennzeichnet, daß** der untere Teil (5a) des Ventilglieds (5) durch eine rücktreibende Feder (11) beaufschlagbar ist, welche bewirkt, daß ohne eine entsprechende Beaufschlagung des Ventilglieds (5) durch die Betätigungskraft (F) der Betätigungsvorrichtung (30) die Sitzfläche (6) des unteren Teils (5a) des Ventilglieds (5) gegen den Ventilsitz (7) des Primäranschlußes (2) gepreßt wird.

14. Ventil nach einem der vorangehenden Ansprüche, **dadurch gekennzeichnet, daß** durch das Betätigungselement (31) ein mit dem mittleren Teil (5b) des Ventilglieds (5) zusammenwirkender oberer Teil (5c) mit der Betätigungskraft (F) beaufschlagbar ist, und daß der obere Teil (5c) des Ventilglieds (5) relativbeweglich zu dem mit dem unteren Teil (5a) verbundenen mittleren Teil (5b) des Ventilglieds (5) ist.

15. Ventil nach einem der vorangehenden Ansprüche, **dadurch gekennzeichnet, daß** das Ventil (1) einen Tertiäranschluß (4) aufweist, daß das freie Ende (5b') des mittleren Teils (5b) in den Tertiäranschluß (4) ragt, und daß durch das freie obere Ende (5b') des mittleren Teils (5b) des Ventilglieds (5) ein Ventilsitz (17) des Tertiäranschlußes (4) ausgebildet ist, der mit einer Sitzfläche (16) des oberen Teils (5c) des Ventilglieds (5) zusammenwirkt.

16. Ventil nach einem der vorangehenden Ansprüche, **dadurch gekennzeichnet, daß** der obere Teil (5c) des Ventilglieds (5) von einer rücktreibenden Feder (21) beaufschlagbar ist.
